# EUROPEAN PATENT APPLICATION

(11) **EP 4 447 252 A1**
(43) Date of publication of application: **16.10.2024**
(21) Application number: 24159322.7
(22) Date of filing: 23.02.2024
(51) Int. Cl.: H02J 3/32, H02J 7/00, H02M 3/335

(54) **EQUALIZATION CIRCUIT, BATTERY PACK, AND ENERGY STORAGE SYSTEM**

(30) Priority: 24.02.2023 CN 202310209921
(71) Applicant: Huawei Digital Power Technologies Co., Ltd., Shenzhen, Guangdong 518043 (CN)
(72) Inventor: LI, Huajia, Shenzhen 518043 (CN); ZHENG, Zepeng, Shenzhen 518043 (CN); CHEN, Baoguo, Shenzhen 518043 (CN)
(74) Representative: Gill Jennings & Every LLP

(57) **Abstract**

This application provides an equalization circuit, a battery pack, and an energy storage system, to implement bidirectional flow of energy between battery packs, and implement active equalization, thereby improving capacity utilization of the battery packs. The equalization circuit includes a transformer, a bridge resonant circuit, a bridge circuit, a resonant unit, a first end, and a second end The equalization circuit is connected an equalization bus through one of the first end and the second end, and is connected to a battery pack through the other end The equalization circuit is configured to: when a difference between a state of charge (SOC, State of Charge) of the battery pack and an SOC or SOCs of any one or more other battery packs exceeds an equalization threshold, by turning on or off switch transistors of the bridge resonant circuit and the bridge circuit, receive, through the equalization bus, discharge power of the one or more other battery packs, and input charge power to the battery pack; or receive discharge power output by the battery pack, and output, to the equalization bus, charge power for inputting to the one or more other battery packs. According to the equalization circuit, the battery pack, the energy storage system, and an active equalization method between battery packs provided in this application, uniformity between SOCs of the battery packs can be flexibly adjusted, and a charging/discharging capability of the energy storage system can be improved. In addition, optimal efficiency in an equalization process can be achieved by adjusting a gain of the equalization circuit.

## Description

### TECHNICAL FIELD

This application relates to equalization between battery packs, and in particular, to an equalization circuit, a battery pack, and an energy storage system.

### BACKGROUND

With rapid development of new energy power generation technologies, to ensure that new energy power generation does not affect normal operation of a power system, an energy storage system is widely used in the fields of power generation, power transmission, power distribution, and power consumption. The energy storage system can play different functions and have different values at different time points and nodes of the power system. Therefore, capacity and reliability requirements of the energy storage system are increasingly high. In the energy storage system, cells are connected in series and/or in parallel to form a battery pack, and then battery packs are connected in series to form a battery rack, to increase a voltage and a capacity. However, when the energy storage system operates for a long time, different battery packs have different states of charge and capacities. Therefore, during a charging/discharging process of the battery packs, batteries in some battery packs have surplus electricity that cannot be released, and some battery packs have surplus battery capacities but cannot be charged. As a result, a charging/discharging capability of the battery rack is affected, and efficiency of the energy storage system is seriously affected.

### SUMMARY

This application provides an equalization circuit, a battery pack, and an energy storage system, to improve uniformity of states of charge of battery packs, so that all battery packs in the energy storage system can be fully charged/ discharged, thereby improving efficiency of the energy storage system.

According to a first aspect, this application provides an equalization circuit. In a first possible embodiment, the equalization circuit includes a transformer, a bridge resonant circuit, a bridge circuit, a first end, and a second end. The first end is connected to a primary-side winding of the transformer through the bridge resonant circuit. The second end is connected to a secondary-side winding of the transformer through the bridge circuit. One of the first end and the second end is configured to be connected to an equalization bus, and the other one is configured to be connected to a battery pack. The bridge resonant circuit includes a resonant inductor and at least one bridge arm, and the bridge arm of the bridge resonant circuit includes at least two switch transistors. The bridge circuit includes at least one bridge arm, and the bridge arm of the bridge circuit includes at least two switch transistors. The equalization circuit is configured to: when a state of charge (SOC, State of Charge) of the battery pack is less than an SOC or SOCs of any one of one or more other battery packs, and a difference between the SOCs of the other battery packs and the SOC of the battery pack exceeds an equalization threshold, receive discharge power of the one or more other battery packs through the equalization bus, and input charge power to the battery pack; or when an SOC of the battery pack is greater than an SOC or SOCs of any one or more other battery packs, and a difference between the SOC of the battery pack and the SOCs of the other battery packs exceeds an equalization threshold, receive discharge power output by the battery pack, and output, to the equalization bus, charge power for inputting to the one or more other battery packs.

It should be noted that the equalization circuit provided in this embodiment of this application is usually used in an energy storage system, and a series connection between battery packs is a common design of the energy storage system. Therefore, when charging/discharging is performed on the energy storage system, generally, all battery packs are charged/discharged at the same time. In an ideal state, all the battery packs may be fully charged or discharged at the same time, so that energy utilization of the energy storage system may be close to 100%. However, even if all the battery packs use batteries of a same specification from a same manufacturer or a same batch, due to factors such as a difference in manufacturing techniques and a difference in use environments, a difference between the battery packs gradually become larger after the battery packs are used for a period of time. Therefore, it is difficult to fully charge/discharge the battery packs at the same time in the ideal state. Therefore, energy needs to be transferred between the battery packs to reduce a difference between SOCs of the battery packs in an actual use process of the energy storage system. There are a plurality of manners for reducing the difference between the SOCs of the battery packs. In the equalization circuit provided in this embodiment of this application, the equalization bus is designed as an energy "transfer station" to equalize energy between the battery packs. The battery packs connected in series are connected to the equalization bus through equalization circuits corresponding to the battery packs. When the SOCs of the battery packs are equalized, energy may be transferred between the battery packs through the equalization bus. This avoids a case that when equalization needs to be performed between one battery pack and another battery pack, between one battery pack and a plurality of battery packs, or between a plurality of battery packs and a plurality of battery packs, a plurality of multi-level equalization circuits need to be disposed between the plurality of battery packs. Therefore, a structure design of the energy storage system is simpler, and equalization between the battery packs is more flexible and efficient.

In this embodiment provided in this application, each battery pack in the energy storage system may be matched with an equalization circuit, a battery pack with a high battery level may release discharge power to the equalization bus through an equalization circuit, and the equalization bus releases, through the equalization circuit, the received discharge power to another battery pack with a low battery level, and the another battery pack with the low battery level uses the received discharge power as charge power, so that energy is equalized between the battery packs. In this process, because external energy is not required, energy may be equalized between the battery packs in the energy storage system without relying on support of the external energy. Moreover, a transformer is usually disposed in the equalization circuit between the battery pack and the equalization bus, to implement electric isolation on both sides of the equalization circuit. Therefore, when a circuit on a battery pack side is faulty, a corresponding battery pack may be removed from the system in time, so that normal operation of other energy storage units in the energy storage system is not affected; and when a circuit on an equalization bus side is faulty, all battery packs may be disconnected from the equalization bus in time, to ensure safety of the energy storage system. In practical application, electrical components such as a switch component and a fast-blown fuse may be flexibly disposed between the equalization bus and the equalization circuit, to implement fault isolation. Compared with a design in which an equalization circuit is directly disposed between battery packs, there is more operating space for supplementing functional modules.

In addition, it should be noted that specific power consumption also exists in an energy equalization process between battery packs. When power consumption generated by frequent energy equalization is greater than a gain of enhancing a charging/discharging capability of the battery packs brought by energy equalization between the battery packs, energy equalization between the battery packs is unfavorable to efficient utilization of the energy storage system. Therefore, it is necessary to consider a condition under which energy transfer is performed. A difference between SOCs of the battery packs is a direct indicator of an equalization condition. In an ideal state, all battery packs with a same specification have a same electric energy capacity. When SOCs of the battery packs reach a specific threshold, it may be considered that a gain of energy equalization between the battery packs is greater than a loss caused by an equalization process. For details of setting the threshold, refer to a specific application scenario and a corresponding experimental test result. This is not specifically limited in this embodiment of this application. It can be understood that, in actual application, the battery packs may have different electric energy capacities, and factors influencing a difference in the electric energy capacities include but are not limited to a difference in battery manufacturing processes, a difference in use environments, and replacement of battery packs after a period of use. Therefore, in this case, a threshold of a difference between SOCs of specific battery packs is set based on a difference in battery capacities, so that all battery packs may be fully charged or vented at the same time.

With reference to the first possible embodiment of the first aspect, in a second possible embodiment, the bridge resonant circuit includes a first bridge arm and a second bridge arm that are connected in parallel; the resonant inductor is connected between a first end of the primary-side winding of the transformer and a midpoint of the first bridge arm or between a second end of the primary-side winding of the transformer and a midpoint of the second bridge arm; and the bridge circuit includes a third bridge arm and a fourth bridge arm that are connected in parallel, a midpoint of the third bridge arm is connected to a first end of the secondary-side winding of the transformer, and a midpoint of the fourth bridge arm is connected to a second end of the secondary-side winding of the transformer.

It may be understood that different quantities of switch transistors may be configured on a bridge arm of the bridge resonant circuit and a bridge arm of the bridge circuit based on a specific design requirement, and a current in the equalization circuit may flow in different bridge arms by turning on or off switch transistors on different bridge arms. Specifically, when the equalization bus outputs charge power to a battery pack, a current source comes from the equalization bus, and a direction of the current in the bridge resonant circuit may be controlled by controlling switch transistors of the bridge resonant circuit, and when the switch transistors of the bridge resonant circuit are turned on alternately and regularly, an inverter function may be generated, to convert a direct current input from the equalization bus to a periodic alternating current in the primary-side winding of the transformer. Accordingly, a periodic alternating current in an opposite direction may be generated in the secondary-side winding of the transformer, and the alternating current on the secondary-side winding may eventually flow into the battery pack in a same direction under rectification action of the bridge circuit, to charge the battery pack. When the battery pack outputs discharge power to the equalization bus, a current source comes from the battery pack, a direction of the current in the bridge circuit may be controlled by controlling switch transistors in the bridge circuit, and an inverter function may also be generated, to convert a direct current output by the battery pack to a periodic alternating current in the secondary-side winding of the transformer. Accordingly, a periodic alternating current in an opposite direction is generated in the primary-side winding of the transformer, and the alternating current in the primary-side winding may eventually flow into the equalization bus in a same direction under rectification action of the bridge resonant circuit, to discharge the battery pack.

It should be understood that, to meet requirements of soft switching of the switch transistors (zero voltage switching, ZVS, zero voltage switch and zero current switching, ZCS, zero current switch), a resonant module may be disposed in the bridge resonant circuit. When the resonant module is designed, at least one resonant inductor needs to be configured, or the primary-side winding of the transformer is equivalent to one resonant inductor. Generation of resonance and a design of parameters such as a switching frequency, a duty cycle, and dead time of a switch transistor are considered, to implement soft switching of the switch transistors in the equalization circuit, reduce voltage stress borne by the switch transistors at a moment of being turned on, and reduce a loss of the switch transistors. Different inductive reactance of resonant inductors also affects an implementation condition of a gain of the resonant circuit. In actual application, the inductive reactance may be configured based on a specific situation. This is not limited in this application.

With reference to the second possible embodiment of the first aspect, in a third possible embodiment, the first bridge arm includes a first switch transistor and a second switch transistor that are connected in series; the midpoint of the first bridge arm is located between the first switch transistor and the second switch transistor; the second bridge arm includes a first voltage divider capacitor and a second voltage divider capacitor that are connected in series; and the midpoint of the second bridge arm is located between the first voltage divider capacitor and the second voltage divider capacitor.

With reference to the second possible embodiment of the first aspect, in a fourth possible embodiment, the first bridge arm includes a first switch transistor and a second switch transistor that are connected in series; the midpoint of the first bridge arm is located between the first switch transistor and the second switch transistor; the second bridge arm includes a third switch transistor and a fourth switch transistor that are connected in series; the midpoint of the second bridge arm is located between the third switch transistor and the fourth switch transistor; the bridge resonant circuit further includes a resonant capacitor; and the resonant capacitor, the resonant inductor, and the primary-side winding of the transformer are connected in series between a first end of the primary-side winding of the transformer and the midpoint of the first bridge arm or between a second end of the primary-side winding of the transformer and the midpoint of the second bridge arm.

It should be noted that, in a half-bridge resonant circuit with two switch transistors, two voltage divider capacitors may be disposed, and in a process of alternately charging/discharging the two voltage divider capacitors, not only a voltage borne on the switch transistors may be shared, and stress borne on the switch transistors is reduced. In addition, capacitance reactance of a voltage divider capacitor matches inductance reactance of an inductor, so that the voltage divider capacitor has a strong capability of participating in resonance. Therefore, the voltage divider capacitor may participate in resonance in a charging/discharging process, and a resonance capacitor does not need to be additionally disposed. However, in a full-bridge resonant circuit with four switch transistors, because no voltage divider capacitor can participate in resonance, a resonant capacitor and a resonant inductor need to be disposed in series, and the resonant capacitor and the resonant inductor may be connected in series to two ends of the primary-side winding of the transformer, or may be connected in series to a same end of the primary-side winding of the transformer. This is not limited in this application.

With reference to the second to the fourth possible embodiments of the first aspect, in a fifth possible embodiment, the third bridge arm includes a fifth switch transistor and a sixth switch transistor that are connected in series; the midpoint of the third bridge arm is located between the fifth switch transistor and the sixth switch transistor; the fourth bridge arm includes a third voltage divider capacitor and a fourth voltage divider capacitor that are connected in series; and the midpoint of the fourth bridge arm is located between the third voltage divider capacitor and the fourth voltage divider capacitor.

With reference to the second to the fourth possible embodiments of the first aspect, in a sixth possible embodiment, the third bridge arm includes a fifth switch transistor and a sixth switch transistor that are connected in series; the midpoint of the third bridge arm is located between the fifth switch transistor and the sixth switch transistor; the fourth bridge arm includes a seventh switch transistor and an eighth switch transistor; and the midpoint of the fourth bridge arm is located between the seventh switch transistor and the eighth switch transistor.

It should be understood that, in a half-bridge circuit with two switch transistors, two voltage divider capacitors may also be disposed to share a voltage borne by the switch transistors. In addition, the voltage divider capacitor may also adapt to corresponding capacitive reactance, to participate in resonance to some extent. A full-bridge circuit with four switch transistors may also perform rectification and inverter functions, and cooperate with the bridge resonant circuit, so that the equalization circuit charges the battery pack, and the battery pack discharges to the equalization bus. A specific configuration of the bridge circuit is not limited in this application.

With reference to the sixth possible embodiment of the first aspect, in a seventh possible embodiment, the equalization circuit further includes an additional resonant capacitor.

The additional resonant capacitor is connected to the first end of the secondary-side winding of the transformer and the midpoint of the third bridge arm, or is connected to the second end of the secondary-side winding of the transformer and the midpoint of the fourth bridge arm.

It should be noted that a resonance capability of the equalization circuit affects operation efficiency of the equalization circuit. Generally, when the equalization circuit operates at a resonance frequency, a gain of the equalization circuit is 1, an electric energy loss of the switch transistor is the lowest, and efficiency of the equalization circuit is the highest. However, when the energy storage system actually performs equalization between battery packs, to maximize efficiency, a voltage of the equalization bus may be determined by a voltage or voltages of one or some battery packs. For example, the voltage of the equalization bus may be determined by a battery pack with a highest SOC. That is, an equalization circuit corresponding to the battery pack with the highest SOC remains in a working state with a gain of 1, gains of other equalization circuits may be greater than 1, and gains of some equalization circuits may be less than 1. This helps execute a gain strategy with highest efficiency. Therefore, a gain capability of the equalization circuit needs to be greater than 1 in a charging/discharging process, so that there is more space for adjusting gains of equalization circuits in the charging/discharging process, to adapt to an optimal equalization strategy.

When the equalization bus charges the battery pack, the resonant inductor, the resonant capacitor, and an excitation inductor equivalent to the primary-side winding of the transformer may all participate in resonance. In this case, a gain capability of the equalization circuit may be greater than 1. When the battery pack discharges to the equalization bus, if a full-bridge circuit is used on a secondary-side winding side, because there is no capacitor used to charge/discharge the secondary-side winding, a voltage of the secondary-side winding is fixed. Because a voltage of the excitation inductor is the same as a voltage of the primary-side winding, and a ratio of the voltage of the primary-side winding to the voltage of the secondary-side winding is fixed, the voltage of the excitation inductor is clamped by the voltage of the secondary-side winding, and the excitation inductor cannot participate in resonance. Therefore, when the battery pack discharges to the equalization bus, a resonance capability of the equalization circuit is reduced and cannot reach a level greater than 1. In this case, an additional resonant capacitor may be disposed in the full-bridge circuit, so that in a discharging process of the battery pack, the additional resonant capacitor may charge/discharge the secondary-side winding. Therefore, a problem that the secondary-side winding of the transformer clamps the excitation inductor and the voltage of the primary-side winding of the transformer can be resolved, the resonance capability of the equalization circuit can be improved, and gain adjustment of the equalization circuit can be more flexible.

With reference to the second to the sixth possible embodiments of the first aspect, in an eighth possible embodiment, the equalization circuit further includes an additional inductor, and the additional inductor is connected to the midpoint of the first bridge arm and the midpoint of the second bridge arm.

As described above, in a discharging process, the excitation inductor does not participate in resonance. Therefore, the additional inductor may be configured, so that the additional inductor participates in resonance in the discharging process of the battery pack. This improves the resonance capability of the equalization circuit in the discharging process of the battery pack, and a gain of the equalization circuit may be greater than 1, to adapt to an optimal equalization strategy.

With reference to the first to the eighth possible embodiments of the first aspect, in a ninth possible embodiment, the equalization circuit is configured to change switching frequencies and duty cycles of switch transistors of the bridge resonant circuit and the bridge circuit, so that a gain of the equalization circuit is a target gain.

As described above, when the gain of the equalization circuit is 1, operation efficiency is the highest, and when the equalization circuit has a corresponding gain capability, and a switching frequency of a switch transistor is a resonance frequency of the equalization circuit, the gain of the equalization circuit is 1, a circuit loss is the lowest, and efficiency is the highest. The equalization bus is used as an energy "transfer station", and a voltage of the equalization bus comes from a discharge voltage output by a battery pack with a high battery level, and the discharge voltage received by the equalization bus is affected by a number of windings of primary-side windings of the transformer and a number of windings of secondary-side windings of the transformer, and a switching frequency and a duty cycle of a switch transistor in the equalization circuit. In an actual operation process of the equalization circuit, a gain in a charging process and a gain in a discharging process may be greater than 1 or less than 1. In this case, a switching frequency and a duty cycle of a switch transistor may be adjusted, so that the equalization circuit operates in a working state with a gain of 1. In this way, a voltage of the equalization bus is also adjusted to a corresponding voltage value when the gain of the equalization circuit is 1.

With reference to the first to the ninth possible embodiments of the first aspect, in a tenth possible embodiment, the equalization circuit is configured to change the switching frequency and the duty cycle of the switch transistor of the bridge resonant circuit or the bridge circuit, so that a ratio of a voltage of the equalization bus to a voltage of the battery pack is a target ratio.

It should be understood that the equalization bus is connected to a plurality of battery packs through a plurality of equalization circuits. To enable one or more equalization circuits to operate in a working state with a gain of 1, a ratio of a voltage of the equalization bus to a voltage/voltages of a battery pack/battery packs corresponding to the one or more equalization circuits needs to meet a specific condition, for example, is equal to a ratio of a number of windings of primary-side windings of the transformer to a number of windings of secondary-side windings of the transformer. In an equalization strategy, after the ratio of the voltage of the equalization bus to the voltage of the battery pack is designed, to maintain the ratio relationship, each equalization circuit needs to continuously adjust a switching frequency and a duty cycle of a switch transistor in the equalization circuit, to adjust the charge power output by the equalization bus and the discharge power output by the battery pack. In this case, a gain of each equalization circuit is distributed around 1, and overall efficiency is also optimal.

With reference to the tenth possible embodiment of the first aspect, in an eleventh possible embodiment, the equalization circuit is configured to change the switching frequencies and the duty cycles of the switch transistors of the bridge resonant circuit and the bridge circuit based on a change of the voltage of the battery pack, so that a ratio of the voltage of the equalization bus to the voltage of the battery pack is 2:1.

It should be understood that, in an embodiment provided in this application, the ratio of the voltage of the equalization bus to the voltage of the battery pack, that is, 2:1, helps achieve optimal overall equalization efficiency.

According to a second aspect, for the first to the eleventh embodiments of the first aspect, an embodiment of this application provides a battery pack. In a twelfth possible embodiment, the battery pack includes any equalization circuit in the first to the eleventh embodiments of the first aspect.

It should be noted that the battery pack provided in this embodiment of this application may be built with the equalization circuit provided in this embodiment of this application after being manufactured, or may be in a form in which an independent battery pack is combined with an equalization module having the equalization circuit. This is not specifically limited in this embodiment of this application.

According to a third aspect, for the first to the eleventh embodiments of the first aspect, an embodiment of this application provides an energy storage system. In a thirteenth possible embodiment, the energy storage system includes n battery packs, n equalization circuits according to any one of claims 1 to 11, and an equalization bus, where n is a positive integer greater than or equal to 2, and the battery packs one-to-one correspond to the equalization circuits; the n battery packs are connected in series; and a first end of each equalization circuit is connected to a corresponding battery pack, and a second end of each equalization circuit is connected to the equalization bus.

In this embodiment of this application, when a difference between SOCs of battery packs reaches an equalization threshold, an equalization requirement is triggered, and the equalization circuit enters a working mode, so that a battery pack on which discharging needs to be performed for equalization outputs discharge power to the equalization bus, and a battery pack on which charging needs to be performed for equalization receives charge power from the equalization bus. In this way, the difference between the SOCs of the battery packs is gradually reduced till almost 0, and finally all the battery packs can be charged or discharged to a maximum extent in subsequent normal charging (for example, receiving charge power from an external power grid) and discharging processes (for example, outputting discharge power to an external load). Therefore, comprehensive charging/discharging efficiency of the energy storage system can be improved.

### BRIEF DESCRIPTION OF DRAWINGS

FIG. 1 is a possible application scenario according to an embodiment of this application;
FIG. 2 is an architecture of active equalization between battery packs in an energy storage system according to an embodiment of this application;
FIG. 3 is a schematic diagram of a structure of an equalization circuit according to an embodiment of this application;
FIG. 4 is a detailed schematic diagram of a structure of an equalization circuit according to an embodiment of this application;
FIG. 5 is a schematic diagram of structures of four types of half-bridge resonant circuits according to an embodiment of this application;
FIG. 6 is a schematic diagram of structures of four types of full-bridge resonant circuits according to an embodiment of this application;
FIG. 7 is a schematic diagram of structures of two types of half-bridge circuits according to an embodiment of this application;
FIG. 8 is a schematic diagram of structures of two types of full-bridge circuits according to an embodiment of this application;
FIG. 9 is a schematic diagram of structures of four types of LLC equalization circuits according to an embodiment of this application;
FIG. 10 is a schematic diagram of structures of four types of LLLC equalization circuits according to an embodiment of this application;
FIG. 11 is a schematic diagram of structures of four types of CLLC equalization circuits according to an embodiment of this application;
FIG. 12 is a schematic diagram of energy flow of an LLC equalization circuit during charging/discharging according to an embodiment of this application;
FIG. 13 is a schematic diagram of energy flow of an LLLC equalization circuit during charging/discharging according to an embodiment of this application;
FIG. 14 is a schematic diagram of energy flow of a CLLC equalization circuit during charging/discharging according to an embodiment of this application; and
FIG. 15 is a schematic diagram of an equalization process between battery packs in an energy storage system according to an embodiment of this application.

### DESCRIPTION OF EMBODIMENTS

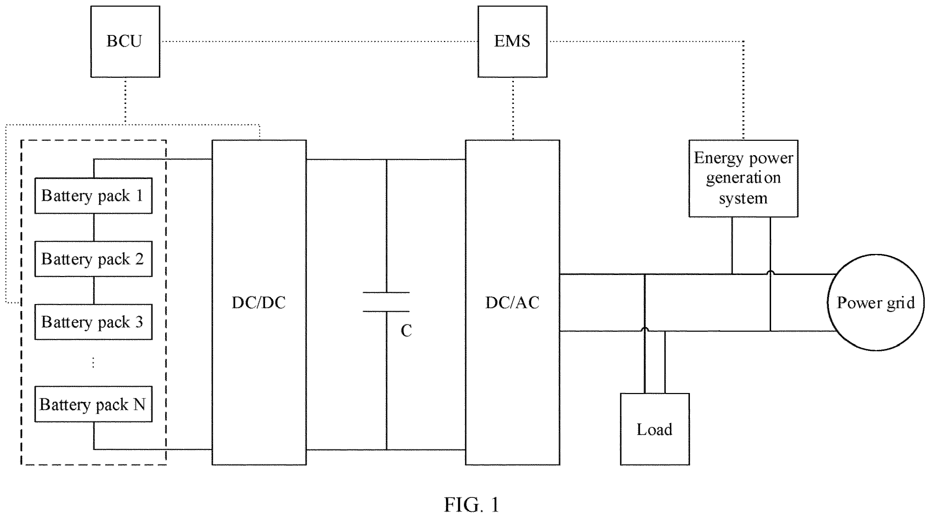

This application provides an equalization circuit, a battery pack, and an energy storage system, and may be used in a plurality of application scenarios that have energy storage requirements, such as new energy power generation, a home, industrial and commercial electricity consumption, and a new energy vehicle. FIG. 1 shows an example of an energy storage system to which embodiments of this application can be applied.

In the energy storage system, based on power consumption and a requirement for a power supply voltage, generally, cells are connected in series and/or in parallel to form a battery pack, and then battery packs are connected in series to form a battery rack, to increase a voltage and a capacity. When charging/discharging is implemented by using the battery rack formed by the battery packs, all the battery packs are charged or discharged at the same time, and ideally, all the battery packs can be fully charged or discharged at the same time. However, due to influence of various factors such as specifications, differences in manufacturing techniques, use environments, and use time of the cells, an electric energy storage capability of each cell in a battery pack varies, and a state of charge (SOC, State of Charge) of each cell also varies. Differences between the cells in the battery pack are superimposed, and the differences are magnified between the battery packs. Therefore, the battery packs are more likely to have different electric energy storage capabilities and different SOCs. Further, differences between the battery packs are accumulated in the battery rack, thereby affecting a charging/discharging capability of the battery rack. For example, when the battery rack is charged, because SOCs of some battery packs in the battery rack are high, these battery packs are fully charged first, and other battery packs still have surplus energy storage space. However, because all the battery packs in the battery rack are charged/discharged at the same time, if a battery pack with surplus energy storage continues to be charged, it means that a fully charged battery pack also needs to be charged. However, the energy storage system usually has a protection mechanism to prevent the battery rack from being continuously charged in this situation, to further prevent the fully charged battery pack from being exploded due to continuous charging. A discharging process is similar to the foregoing charging process. Because SOCs of some battery packs are low, after power of these battery packs is fully discharged, the energy storage system does not allow the battery rack to continue discharging, to prevent damage to the battery packs.

Because a difference between SOCs of different battery packs exists after the energy storage system runs for a long time, during a charging/discharging process of the battery packs, some battery packs have surplus power that cannot be released, and some battery packs have surplus energy storage space but cannot be charged. As a result, a charging/discharging capability of the battery rack is affected, and efficiency of the energy storage system is affected. To avoid the foregoing situation, SOCs of battery packs need to be effectively equalized, to improve charging/discharging capabilities of the battery packs, and improve comprehensive efficiency of the energy storage system.

In the equalization circuit provided in embodiments of this application, an equalization bus is used as an energy transfer station. By using the equalization circuit, a high-SOC battery pack may discharge to the equalization bus, and the equalization bus may charge a low-SOC battery pack. In this way, SOCs between battery packs are equalized. The solution provided in embodiments of this application is applicable to an energy storage system formed based on batteries of different types. The batteries may be lithium-ion batteries, lead-acid batteries (or referred to as lead-acid storage batteries), or the like. A specific type of the battery is not specifically limited in embodiments of this application. For ease of description, in embodiments of this application, possible different types of batteries in the energy storage system in embodiments of this application are collectively referred to as batteries, and battery packs including different types of batteries are also collectively referred to as battery packs.

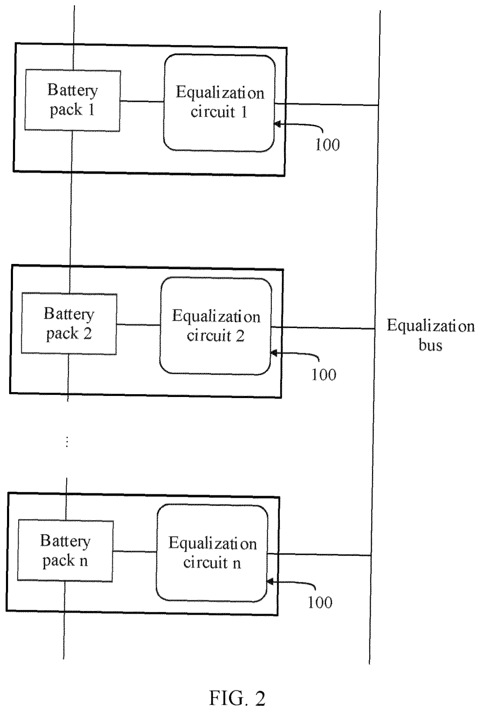

FIG. 2 shows an example of a use environment of an equalization circuit 100 according to an embodiment of this application. Because there are a plurality of battery packs in the energy storage system, one equalization circuit 100 may be configured for each battery pack, and each equalization circuit 100 includes a first end and a second end that are configured to be connected to an equalization bus or a battery pack. In specific application, any one of the first end and the second end may be selected to be connected to the equalization bus, and the other one is connected to a corresponding battery pack. When an SOC or SOCs of one or more battery packs are high, for example, SOCs of a battery pack 1, a battery pack 2, and a battery pack 3 are high, an SOC or SOCs of other one or more battery packs are low, for example, SOCs of a battery pack n, a battery pack n-1, and a battery pack n-2 are low, and a difference between an SOC of a high-SOC battery pack and an SOC of a low-SOC battery pack exceeds an equalization threshold, an equalization circuit 1, an equalization circuit 2, and an equalization circuit 3 may receive discharge power output by the battery pack 1, the battery pack 2, and the battery pack 3, and output the discharge power to the equalization bus. The output power is input to the battery pack n, the battery pack n-1, and the battery pack n-2 as charge power. Specifically, an equalization circuit n, an equalization circuit n-1, and an equalization circuit n-2 receive, through the equalization bus, the discharge power output by the battery pack 1, the battery pack 2, and the battery pack 3, and input the charge power to the battery pack n, the battery pack n-1, and the battery pack n-2. Therefore, the SOCs of the battery packs are equalized. In this process, the battery packs use the equalization bus as an energy transfer station through the equalization circuit, to transfer energy between the battery packs. Therefore, a plurality of complex power conversion modules do not need to be cross-disposed between the battery packs. Instead, a plurality of equalization circuits 100 are configured in the energy storage system, so that an architecture of active equalization of the energy storage system is simpler, more flexible, and more efficient.

The equalization circuit provided in embodiments is used to resolve a problem of unequalized energy between battery packs. Operation of the equalization circuit causes specific power consumption, and when the energy between the battery packs is in an equalized state, repeated and meaningless equalization not only cannot improve overall efficiency of the energy storage system, but also consumes energy of the energy storage system. Therefore, the equalization circuit performs equalization only when SOCs of the battery packs meet a specific condition. Optionally, when a difference between an SOC of a battery pack and an SOC or SOCs of any one or more other battery packs is greater than a specific value, for example, 10%, it may be considered that the difference between the SOC of the battery pack and the SOC or the SOCs of any one or more other battery packs is large, and energy between the battery packs is unequalized. For example, an SOC of one battery pack is 20%, and an SOC of another battery pack is 10%. In the energy storage system, because the battery packs are usually connected in series, the battery packs output electric energy to the outside or receive electric energy input from the outside at the same time, and charging/discharging rates of the battery packs are the same. In this case, if the battery packs of the energy storage system need to be charged, when the battery pack whose SOC is 20% is fully charged, the battery pack whose SOC is 10% has about 10% remaining energy storage space; and if the battery packs of the energy storage system need to be discharged to external loads or power grids, when the battery pack whose SOC is 10% is fully discharged, the battery pack whose SOC is 20% has 10% energy surplus. This unequalized state in which all the battery packs cannot be fully charged or discharged at the same time limits a charging/discharging capability of the energy storage system and affects operation efficiency of the energy storage system. In an ideal state, using same battery packs enables all the battery packs to be fully charged or discharged at the same time, so that energy utilization of the energy storage system may be as close to 100% as possible. However, even if all the battery packs use batteries of a same specification from a same manufacturer or a same batch, due to factors such as a difference in manufacturing techniques and a difference in use environments, a difference between the battery packs gradually become larger after the battery packs are used for a period of time. Therefore, it is difficult to fully charge/discharge the battery packs at the same time in the ideal state. In this case, energy transfer between the battery packs needs to be implemented by using an equalization circuit, so that differences between the battery packs are smaller in an actual use process of the energy storage system. Certainly, optionally, 1% may be set as an equalization threshold, that is, when a difference between an SOC of a battery pack and an SOC or SOCs of any one or more other battery packs exceeds 1%, a battery pack discharges to the equalization bus, or the equalization bus charges a battery pack. In this way, an energy difference between battery packs is smaller. However, because an equalization operation trigger condition is easy to meet, equalization is more frequently performed, and correspondingly, some power consumption is also caused. Therefore, the equalization threshold may alternatively be set to 2%, 3%, 5%, or another value. Factors such as power consumption caused by a trigger frequency of an equalization process, benefits brought by equalization to the energy storage system, and requirements for a charging/discharging capability of the energy storage system in a specific application scenario are mainly considered, and a specific value of the equalization threshold may be comprehensively considered by using a related experimental test. This is not specifically limited in embodiments of this application.

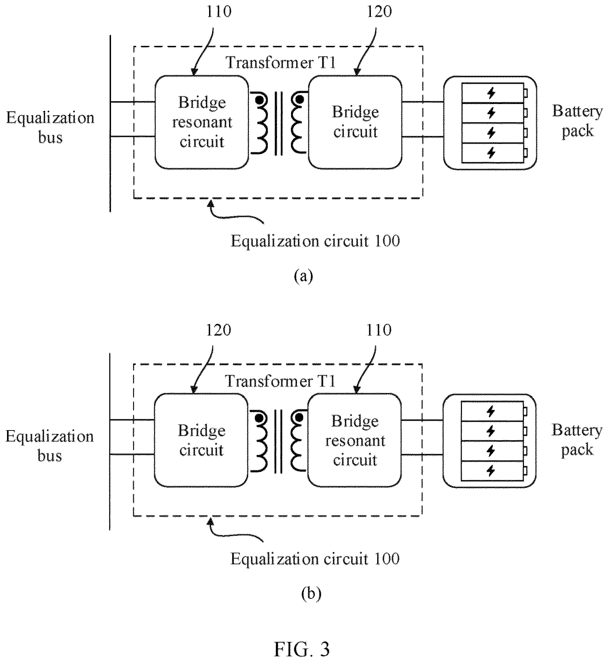

Specifically, the equalization circuit provided in embodiments of this application includes a transformer, a bridge resonant circuit, and a bridge circuit. FIG. 3 shows an example of two connection cases of an equalization circuit according to an embodiment of this application. FIG. 3(a) is used as an example. The equalization circuit 100 has two connection ends: a first end and a second end. The first end is connected to an equalization bus, and is connected to a primary-side winding of a transformer TI through a bridge resonant circuit 110. The second end is connected to a battery pack, and is connected to a secondary-side winding of the transformer T1 through a bridge circuit 120. When the equalization bus needs to charge the battery pack, an inverter function is generated by turning on or off a switch transistor in the bridge resonant circuit 110, an alternating current is generated on the primary-side winding of the transformer T1, the alternating current is coupled to the secondary-side winding of the transformer T1 through the transformer T1, and a rectification function is generated by turning on or off a switch transistor in the bridge circuit 120, so that a current finally flows into the battery pack from a positive terminal of the battery pack, to charge the battery pack. A process in which the battery pack outputs discharge power to the equalization bus is similar, and details are not described herein again. It should be noted that FIG. 3 is merely an example for describing a structure and a connection manner of the equalization circuit provided in embodiments of this application, and is not intended to limit the structure and the connection manner of the equalization circuit. For example, a connection relationship between the equalization bus and the battery pack may be that the equalization bus is connected to the bridge circuit 120, and the battery pack is connected to the bridge resonant circuit 110. This is not specifically limited in embodiments of this application. The primary-side winding and the secondary-side winding of the transformer T1 mentioned in embodiments of this application and a location relationship thereof are merely for ease of describing relative locations of internal structures of the equalization circuit 100 in various implementations provided in embodiments of this application, and are not intended to limit an energy flow direction.

Embodiments of this application provide a plurality of different equalization circuits for different designs of the bridge resonant circuit and the bridge circuit.

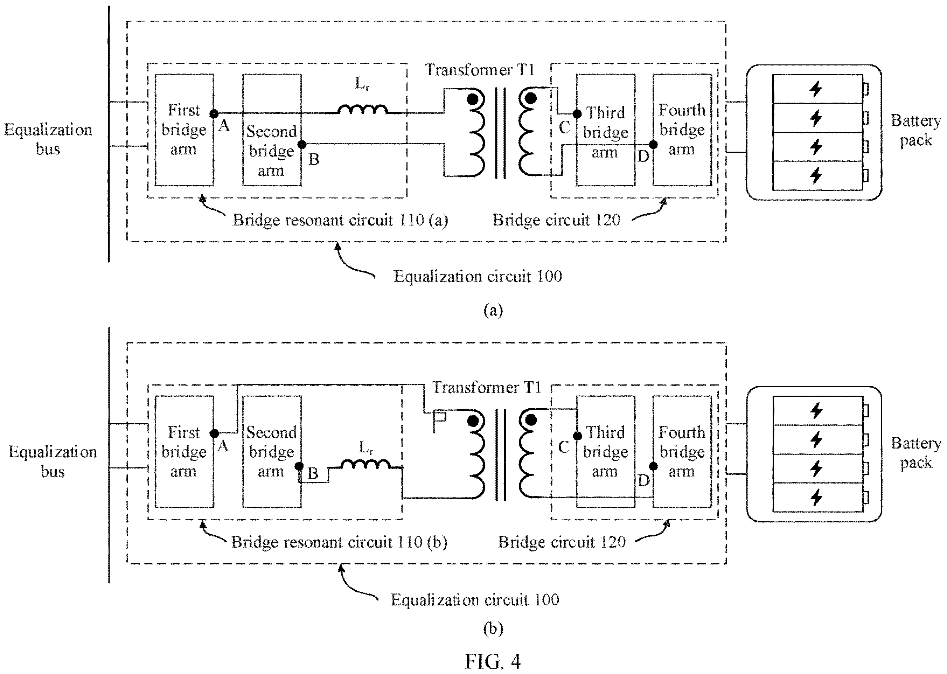

FIG. 4(a) shows an example of a detailed structure of the equalization circuit 100 according to an embodiment of this application. In an implementation of this embodiment of this application, the bridge resonant circuit 110 includes two bridge arms: a first bridge arm and a second bridge arm, the second bridge arm and the first bridge arm are connected in parallel, and a resonant inductor Lᵣ is connected between one end of the primary-side winding of the transformer T1 and a midpoint A of the first bridge arm. Alternatively, as shown in FIG. 4(b), the resonant inductor Lᵣ is connected between the other end of the primary-side winding of the transformer T1 and a midpoint of the second bridge arm. Different electronic components are disposed on the first bridge arm and the second bridge arm respectively, so that the bridge resonant circuit 110 can play different technical effects in the equalization circuit 100. However, a core function of the bridge resonant circuit 110 is to convert a current input from the equalization bus to generate an alternating current in the primary-side winding of the transformer T1 or to couple an alternating current from the secondary-side winding of the transformer T1 to the primary-side winding of the transformer T1 for rectification, so that the current finally flows out from a positive terminal of the equalization bus. Therefore, there are at least two switch transistors on the first bridge arm or the second bridge arm to guide a direction of a current.

Still refer to FIG. 4(a). Similarly, the bridge circuit 120 also includes two bridge arms, which are respectively a third bridge arm and a fourth bridge arm. The third bridge arm and the fourth bridge arm are connected in parallel. When the other end of the equalization circuit is connected to the battery pack, the fourth bridge arm and the battery pack are connected in parallel. Each of the third bridge arm and the fourth bridge arm has a midpoint, a midpoint C of the third bridge arm is used to be connected to one end of the secondary-side winding of the transformer T1, and a midpoint D of the fourth bridge arm is used to be connected to the other end of the secondary-side winding of the transformer T1. Different electronic components may be disposed on the third bridge arm and the fourth bridge arm respectively, so that the bridge circuit plays different technical effects in the equalization circuit. However, a core function of the bridge circuit is also to play functions of rectification and inverter. Therefore, there are at least two switch transistors on the third bridge arm or the fourth bridge arm to guide a direction of a current. It should be noted that when the bridge resonant circuit implements an inverter function, the bridge circuit implements a rectification function; and when the bridge circuit implements an inverter function, the bridge resonant circuit implements a rectification function.

To implement soft switching of switch transistors, that is, zero voltage switching (zero voltage switch, ZVS) and zero current switching (zero current switch, ZCS), one resonant inductor Lᵣ is further configured in the bridge resonant circuit 110 in an embodiment of this application, to cooperate with other electronic components to generate resonance in an operation process of the equalization circuit 100 to implement ZVS and ZCS. One end of the resonant inductor Lᵣ is connected to the midpoint A of the first bridge arm, and the other end is connected to one end of the primary-side winding of the transformer T1. Certainly, one end of the resonant inductor Lᵣ may alternatively be connected to the midpoint B of the second bridge arm, and the other end may alternatively be connected to the other end of the primary-side winding of the transformer T1. FIG. 4 shows an example of two possible structures and connection manners of the bridge resonant circuit 110. In actual application, any one of the two possible structures and connection manners or another equivalent variant may be used. A structure and a connection manner to be used are not specifically limited in embodiments of this application.

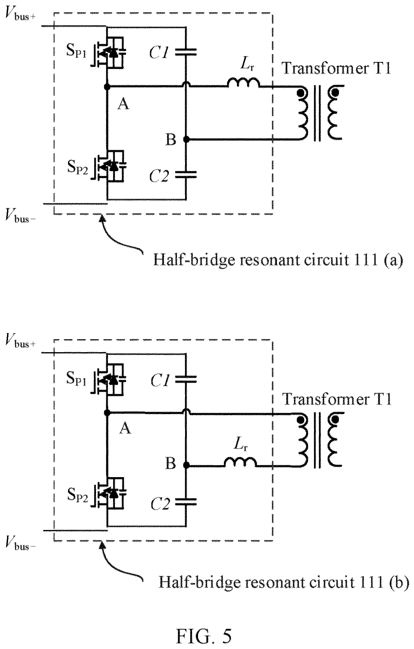

To enable the bridge resonant circuit 110 to implement the foregoing inverter function and a resonance function, in an implementation of this embodiment of this application, the bridge resonant circuit 110 includes two switch transistors S_{P1} and S_{P2} that are connected in series, the midpoint A of the first bridge arm is between the switch transistors S_{P1} and S_{P2}, the bridge resonant circuit 110 includes two voltage divider capacitors C1 and C2 that are connected in series, and the midpoint B of the second bridge arm is between the voltage divider capacitors C1 and C2. This forms a half-bridge resonant circuit 111. FIG. 5 shows an example of structures and connection manners of the half-bridge resonant circuit 111. The switch transistors S_{P1} and S_{P2} are periodically and alternately turned on, so that a current input by the equalization bus may alternately flow through two lines, that is, the current may flow through the switch transistor S_{P1}, the resonant inductor Lᵣ, the primary-side winding of the transformer T1, and C2, and the current may flow through C1, the primary-side winding of the transformer T1, the resonant inductor Lᵣ, and the switch transistor S_{P2}. In this way, a periodic alternating current is generated in the primary-side winding of the transformer T1, and the alternating current is coupled to the secondary-side winding of the transformer T1 through the transformer T1, to transmit energy from an equalization bus end to a battery pack end. Due to existence of the voltage divider capacitors C1 and C2, C1 and C2 respectively resonate with the resonant inductor Lᵣ in a half period of conduction of C1 and C2, and occurrence of resonance is conducive to implementing soft switching of the switch transistors S_{P1} and S_{P2}.

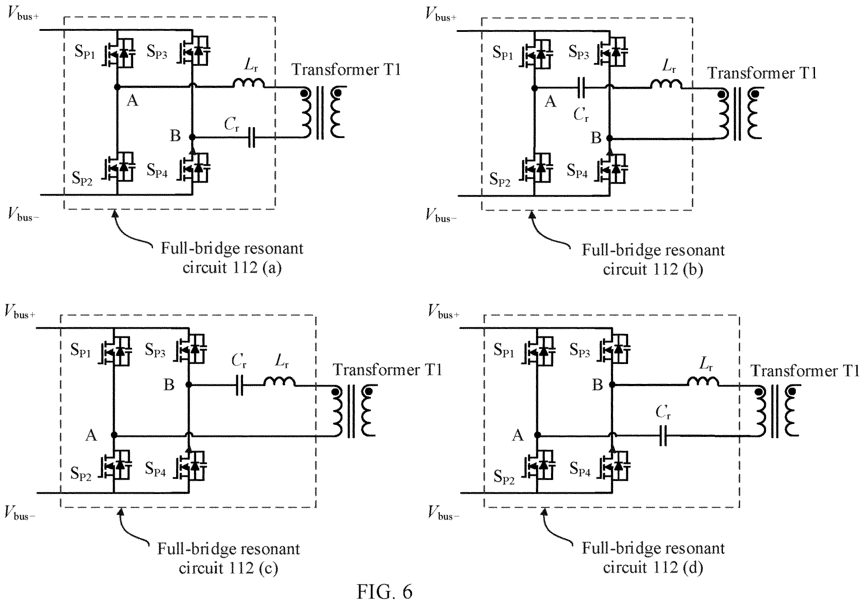

In the bridge resonant circuit 112 provided in embodiments of this application, C1 and C2 on the second bridge arm are replaced with switch transistors S_{P3} and S_{P4}. That is, the bridge resonant circuit 110 includes two switch transistors S_{P1} and S_{P2} that are connected in series, the midpoint A of the first bridge arm is between the switch transistors S_{P1} and S_{P2}, the bridge resonant circuit 110 further includes two switch transistors S_{P3} and S_{P4} that are connected in series, and the midpoint B of the second bridge arm is between the switch transistors S_{P3} and S_{P4}. In addition, because there is no voltage divider capacitor C1 and C2, to meet a requirement of generating resonance in an operation process of the bridge resonant circuit, a resonant capacitor Cᵣ further needs to be connected between one end of the primary-side winding of the transformer T1 and the midpoint of the first bridge arm. Alternatively, the resonant capacitor Cᵣ is connected between the other end of the primary-side winding of the transformer T1 and the midpoint of the second bridge arm, and the resonant capacitor Cᵣ is connected in series with the resonant inductor Lᵣ and the primary-side winding of the transformer T1. This forms a full-bridge resonant circuit 112. FIG. 6 shows an example of four possible structures and connection manners of the full-bridge resonant circuit 112. In actual application, any one of the four possible structures and connection manners or another equivalent variant may be used. A structure and a connection manner to be used are not specifically limited in embodiments of this application.

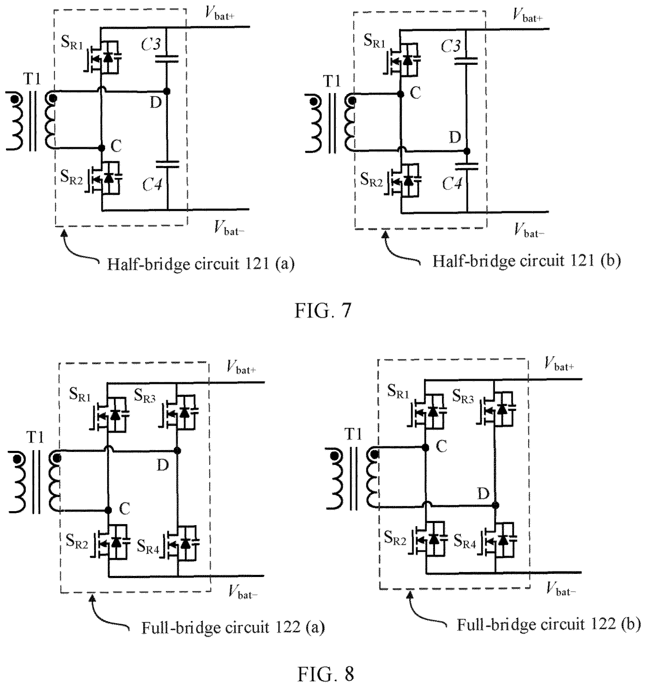

In the bridge circuit 121 provided in embodiments of this application, at a secondary-side winding end of the transformer T1, the third bridge arm includes two switch transistors S_{R1} and S_{R2} that are connected in series, a midpoint C of the third bridge arm is between the switch transistors S_{R1} and S_{R2}, the fourth bridge arm includes two voltage divider capacitors C3 and C4 that are connected in series, and a midpoint D of the fourth bridge arm is between the voltage divider capacitors C3 and C4. This forms a half-bridge circuit 121. FIG. 7 shows an example of two possible structures and connection manners of the half-bridge circuit 121. In actual application, any one of the two possible structures and connection manners or another equivalent variant may be used. A structure and a connection manner to be used are not specifically limited in embodiments of this application.

In the bridge circuit 122 provided in embodiments of this application, the voltage divider capacitors C3 and C4 in the fourth bridge arm are replaced with switch transistors S_{R3} and S_{R4}. That is, the third bridge arm of the bridge circuit 120 includes two switch transistors S_{R1} and S_{R2} that are connected in series, the midpoint C of the third bridge arm is between the switch transistors S_{R1} and S_{R2}, the fourth bridge arm includes two switch transistors S_{R3} and S_{R4} that are connected in series, and the midpoint D of the fourth bridge arm is between the switch transistors S_{R3} and S_{R4}. This forms a full-bridge circuit 122. FIG. 8 shows an example of two possible structures and connection manners of the full-bridge circuit 122. In actual application, any one of the two possible structures and connection manners or another equivalent variant may be used. A structure and a connection manner to be used are not specifically limited in embodiments of this application.

A switch transistor in embodiments of this application may be a transistor (transistor), an insulated gate bipolar transistor (insulated gate bipolar transistor, IGBT), a metal-oxide-semiconductor field-effect transistor (metal-oxide-semiconductor field-effect transistor, MOSFET), a silicon carbide (SiC) MOSFET, a gallium nitride (GaN) MOSFET, or the like. This is not limited in embodiments of this application.

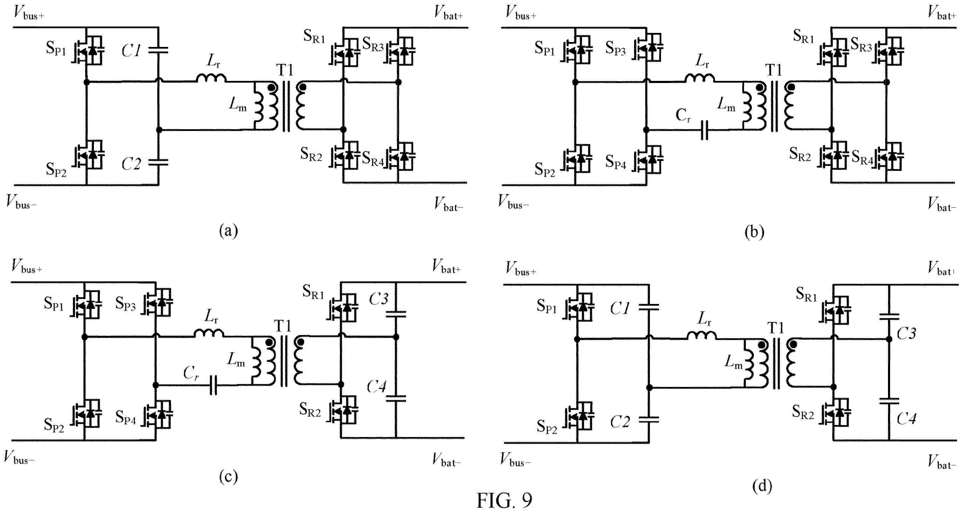

In the foregoing embodiments, the half-bridge resonant circuit 111 and the full-bridge resonant circuit 112 may be randomly combined with the half-bridge circuit 121 and the full-bridge circuit 122. After equivalent circuits are removed, four LLC equalization circuits may be obtained. FIG. 9 shows an example of a structure and a connection manner of an LLC equalization circuit.

It should be noted that, in any LLC equalization circuit in the foregoing embodiments, in a possible application scenario, a gain of the equalization circuit is maintained close to 1. This is generally implemented by setting a switching frequency of a switch transistor close to a resonance frequency of the LLC equalization circuit. When the LLC equalization circuit operates in a working condition with a gain of 1, the LLC equalization circuit operates in a fully resonant state, and in a process in which the equalization bus discharges to the battery pack, a switch transistor on a primary-side winding side of the transformer T1 may implement zero voltage switching, and a body diode of a switch transistor on a secondary-side winding side of the transformer T1 operates in a critical current mode. In this case, zero current switching may be implemented on the body diode of the switch transistor on the secondary-side winding side of the transformer T1, and a loss generated by reverse recovery of the body diode is eliminated. Therefore, operation efficiency of the LLC equalization circuit is the highest. Because a structure of the LLC equalization circuit is fixed, when a gain is also determined, a relationship between a voltage of a battery pack corresponding to the LLC equalization circuit and a voltage of the equalization bus is also determined. In this case, the voltage of the battery pack corresponding to the LLC equalization circuit determines the voltage of the equalization bus. The voltage of the battery pack fluctuates, and the voltage of the equalization bus also fluctuates accordingly.

In specific execution of an equalization strategy, a battery pack corresponding to an equalization circuit may also play a "follow-up" role in the entire energy storage system. That is, the voltage of the equalization bus is determined by a part of standard battery packs, an equalization circuit corresponding to a standard battery pack needs to operate in a working condition with a gain of 1, and when a voltage of the standard battery pack is determined, a gain of the equalization circuit corresponding to the standard battery pack is determined, and an expected voltage of the equalization bus is also determined. In this case, a ratio of the expected voltage of the equalization bus to the voltage of the standard battery pack is a target voltage ratio that the equalization circuit wants to implement.

Specifically, for example, a plurality of battery packs in the energy storage system need to be discharged for equalization, a plurality of battery packs also need to be charged for equalization, and a highest voltage of a battery pack of the battery packs that need to be discharged for equalization is 200 V In this case, the battery pack is used as a reference, and if a ratio of a number of windings of primary-side windings of the transformer to a number of windings of secondary-side windings of the transformer is 2:1, it is now expected that an operation gain of an equalization circuit corresponding to the battery pack is 1, and an expected voltage of the equalization bus needs to be 400 V In this case, if the voltage of the equalization bus needs to be maintained as 400 V, other battery packs with low voltages need to be charged, for example, a battery pack whose voltage is 190 V, and an expected voltage of the equalization bus is 400 V, a ratio of the voltage of the equalization bus to an expected voltage of the equalization bus is 400/190. In this case, a working state of an equalization circuit corresponding to the battery pack needs to be maintained in a state with a gain greater than 1. In an equalization process, a ratio of the voltage of the equalization bus to voltages of the foregoing part of battery packs is always maintained at 2:1, and equalization circuits corresponding to the part of battery packs always operate in a state with an optimal gain. However, a ratio of the voltage of the equalization bus to target voltages of the other battery packs keeps changing, and equalization circuits corresponding to these battery packs do not pursue the optimal gain. However, because a difference between voltages of battery packs in the energy storage system is not excessively large, gains of the part of the equalization circuits usually fluctuate within a limited range around 1. In addition, in this case, because the voltage of the equalization bus is already determined by a voltage of a discharged battery pack, and a voltage of a to-be-charged battery pack is also known, an operation gain of an equalization circuit corresponding to the to-be-charged battery pack is also obtained accordingly. In a charging/discharging process, because the voltage of the discharged battery pack changes, to maintain an original gain strategy, the voltage of the equalization bus also needs to fluctuate accordingly. The foregoing equalization strategy is to determine the voltage of the equalization bus based on a battery pack that has a highest voltage and that needs to be discharged for equalization. In actual application, the voltage of the equalization bus may be determined based on a specific situation by using an average value of voltages of discharged battery packs as a reference or by using a highest voltage or an average value of voltages of to-be-charged battery packs as a reference, to implement an ideal gain strategy and maximize active equalization efficiency. This is not specifically limited in embodiments of this application. Similarly, considering working conditions in which some equalization circuits operate in a working condition with a gain of 1 is only a possible equalization strategy of the equalization circuit provided in embodiments of this application. Based on a specific application requirement, a design of a power module, and a change in a control manner of the equalization circuit, another gain value may be selected as the target gain. This is not specifically limited in embodiments of this application.

In the four LLC equalization circuits provided in FIG. 9, a full-bridge circuit is used on a secondary-side winding side in FIG. 9(a) and FIG. 9(b). In a process of discharging a battery pack, there is no voltage divider capacitor that can charge/discharge the secondary-side winding of the transformer T1, a voltage of the excitation inductor Lₘ is clamped by a voltage of the secondary-side winding, the excitation inductor Lₘ cannot participate in resonance, only the resonant inductor Lᵣ and the resonant capacitor Cᵣ participate in resonance to form LC series resonance. In this resonance mode, a maximum gain of the equalization circuit can only reach 1. However, as described above, in a process in which the energy storage system equalizes SOCs of battery packs, some equalization circuits may need to operate in a working condition with a gain greater than 1, and when the excitation inductor Lₘ is clamped, an equalization strategy with optimal efficiency cannot be implemented. Therefore, power consumption of an equalization process cannot be minimized.

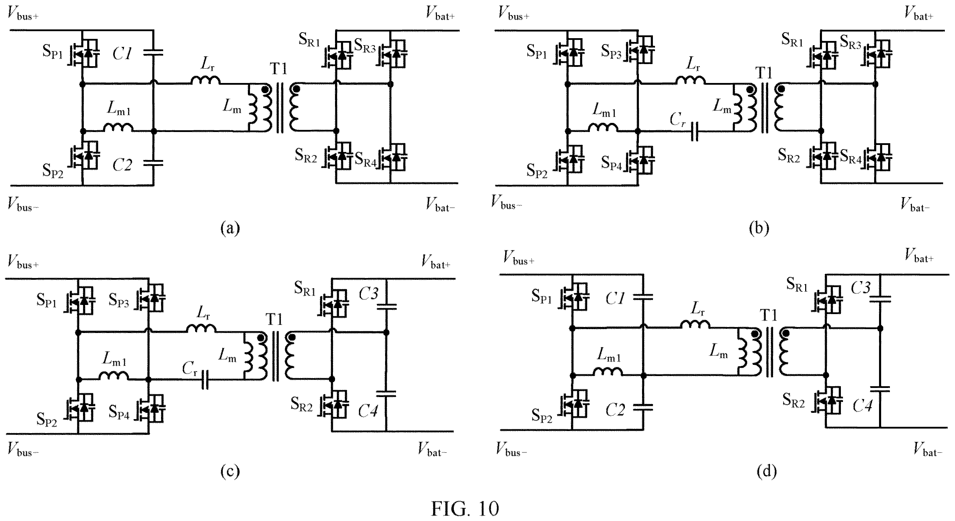

Based on the foregoing reasons, an embodiment of this application further provides an LLLC equalization circuit. FIG. 10 shows structures of four LLLC equalization circuit according to an embodiment of this application.

The bridge resonant circuit 110 further includes an additional inductor. The additional inductor is connected between the midpoint A of the first bridge arm and the midpoint B of the second bridge arm, and is connected in series with the resonant inductor Lᵣ and the primary-side winding of the transformer T1. As described above, generally, when the equalization circuit operates at a resonance frequency, a gain of the equalization circuit is 1, an electric energy of the switch transistor is the lowest, and efficiency of the equalization circuit is the highest. However, when the energy storage system actually performs equalization between battery packs, to maximize efficiency, a voltage of the equalization bus may be determined by a voltage or voltages of one or some battery packs. For example, the voltage of the equalization bus may be determined by a battery pack with a highest SOC. That is, an equalization circuit corresponding to the battery pack with the highest SOC remains in a working state with a gain of 1, gains of other equalization circuits may be greater than 1, and gains of some equalization circuits may be less than 1. This helps execute a gain strategy with highest efficiency. Therefore, a gain capability of the equalization circuit needs to be greater than 1 in a charging/discharging process, so that there is more space for adjusting gains of equalization circuits in the charging/discharging process, to adapt to an optimal equalization strategy.

When the equalization bus charges a battery pack, the resonant inductor Lᵣ, the resonant capacitor Cᵣ, and the excitation inductor equivalent to the primary-side winding of the transformer T1 may all participate in resonance. In this case, a gain capability of the equalization circuit may be greater than 1. When a battery pack discharges to the equalization bus, if a full-bridge circuit is used on a secondary-side winding side of the transformer T1, because there is no voltage divider capacitor used to charge/discharge the secondary-side winding of the transformer T1, a voltage of the secondary-side winding of the transformer T1 is fixed. Because a voltage of the excitation inductor is the same as a voltage of the primary-side winding of the transformer T1, and a ratio of the voltage of the primary-side winding of the transformer T1 to the voltage of the secondary-side winding of the transformer T1 is fixed, the voltage of the excitation inductor is clamped by the voltage of the secondary-side winding and the excitation inductor cannot participate in resonance. Therefore, a gain of the equalization circuit cannot reach a level greater than 1. In this case, the additional inductor may be configured, and the additional inductor may participate in resonance in a discharging process of a battery pack, to improve a resonance capability of the equalization circuit in the discharging process of the battery pack. Therefore, a discharging gain of the equalization circuit may also be greater than 1, to adapt to an optimal equalization strategy.

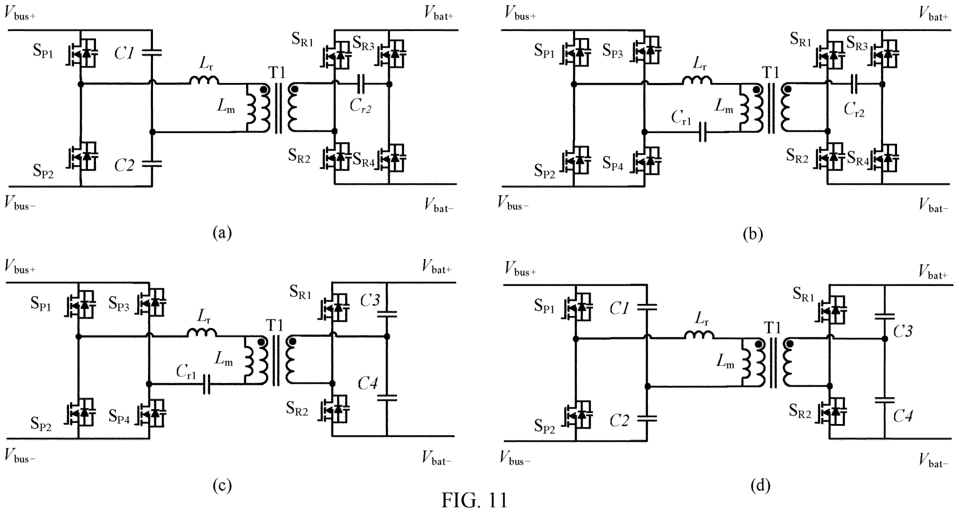

It should be understood that, if no additional inductor is disposed in the resonant circuit of the primary-side winding of the transformer T1, and no voltage divider capacitor in the full-bridge circuit of the secondary-side winding of the transformer T1 participates in resonance, in a process of discharging the battery pack to the equalization bus, a maximum gain of the equalization circuit is less than 1. In this case, an additional resonant capacitor Cᵣ₁ may be further disposed in the full-bridge circuit, and the additional resonant capacitor Cᵣ₁ is connected to either end of the secondary-side winding of the transformer T1 and the midpoint C of the third bridge arm or the midpoint D of the fourth bridge arm. This forms a CLLC equalization circuit. The additional resonant capacitor Cᵣ₁ can charge/discharge the secondary-side winding of the transformer T1 during an equalization process, so that the voltage of the secondary-side winding of the transformer T1 is variable, clamping of the secondary-side winding of the transformer T1 on the excitation inductor can be released, and the excitation inductor also participates in resonance during the discharging process, so that a maximum gain capability during the discharging process of the battery pack to the equalization bus is increased to greater than 1. FIG. 11 shows an example of four possible structural forms of the CLLC equalization circuit.

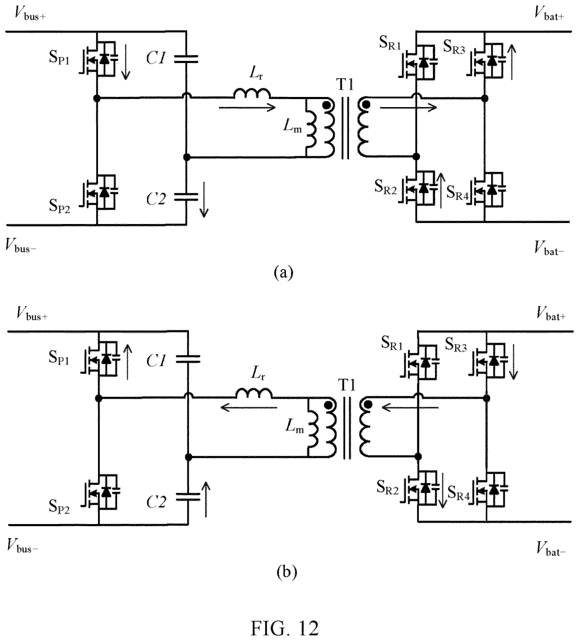

With reference to FIG. 12, the following describes a current flow direction of the LLC equalization circuit in a charging/discharging process of a battery pack.

It may be understood that a switch transistor can conduct a current bidirectionally, while a body diode can only conduct a current unidirectionally. A natural flow direction of a current is from a high level to a low level. In practical application, a current conduction direction of the body diode is usually opposite to a direction of a current naturally output by the battery pack or the equalization bus. Therefore, conduction and a direction of a current on an energy output side may be controlled by turning on or off the switch transistor, and the body diode may be used to conduct a current on an energy receiving side. Switch transistors S_{P1} and S_{P2}, S_{R1} and S_{R2}, and S_{R3} and S_{R4} distributed on both sides of a midpoint of a same bridge arm are regularly and alternately turned on or off, so that an alternating current can be generated at the primary-side winding or the secondary-side winding of the transformer. In this way, the equalization circuit has a function of bidirectionally transferring energy between an equalization bus end and a battery pack end.

FIG. 12(a) shows a current direction in a charging process in an LLC equalization circuit. The current direction is implemented by turning on and off the switch transistors S_{P1} and S_{P2} and a unidirectional conduction function of the body diode in the bridge circuit. This process occurs when a difference between an SOC of the battery pack and an SOC or SOCs of one or more other battery packs in the energy storage system exceeds an equalization threshold, and a battery level of the battery pack is low.

In the charging process, a current source is the equalization bus. In a natural state, a current flows out from a positive terminal of the equalization bus and flows in from a negative terminal of the equalization bus. In this case, the switch transistor S_{P1} may be controlled to be turned on, the current flowing out from the positive terminal of the equalization bus flows from S_{P1} and flows through the resonant inductor Lᵣ, the primary-side winding of the transformer T 1, and the voltage divider capacitor C2; and a current at a battery pack end flows from a body diode of the switch transistor S_{R2} and flows through the secondary-side winding of the transformer T1 and a body diode of the switch transistor S_{R3}, to charge the battery pack. A principle of the other half cycle is similar. In the other half cycle, the switch transistor S_{P2}, a body diode of the switch transistor S_{R1}, and a body diode of the switch transistor S_{R4} are turned on. In the entire operation cycle, an alternating current is generated at the primary-side winding of the transformer, and energy is transferred to the battery pack end through transformer coupling.

In a discharging process, a current source is the battery pack. In a natural state, a current flows out from a positive terminal of the battery pack and flows in from a negative terminal of the battery pack. In this case, the switch transistors S_{R2} and S_{R3} may be controlled to be turned on, the current flowing out from the positive terminal of the battery pack flows from the switch transistor S_{R3} and flows through the secondary-side winding of the transformer T 1 and the switch transistor S_{R2}, and a current at a bus end flows from the voltage divider capacitor C2 and flows through the primary-side winding of the transformer T1, the resonant inductor Lᵣ, and a body diode of the switch transistor S_{P1}, to discharge the battery pack. A principle of the other half cycle is similar, and in the other half cycle, a body diode of the switch transistor S_{P2}, the switch transistor S_{R1}, and the switch transistor S_{R4} are turned on. In an entire operation cycle, an alternating current is generated at the secondary-side winding of the transformer, and energy is transferred to the equalization bus end through transformer coupling.

It should be noted that, at a moment when body diodes are turned on, switch transistors corresponding to the body diodes may also be controlled to be turned on, to implement cooperative control between the switch transistors and the body diodes. In this case, because a voltage drop of a switch transistor is small, most currents flow through the switch transistor, and only a small part of currents flow through a body diode. Therefore, the body diode may be omitted, and a switch transistor without a body diode is used in the equalization circuit, and only the switch transistor is used to control a current flow direction, to implement a corresponding rectification function and an inverter function. Existence of a parasitic capacitor is more conducive to soft switching of the switch transistor. In actual application, whether to use a switch transistor that has a parasitic capacitor may be determined based on an actual requirement. Specific selection of the switch transistor is not specifically limited in embodiments of this application.

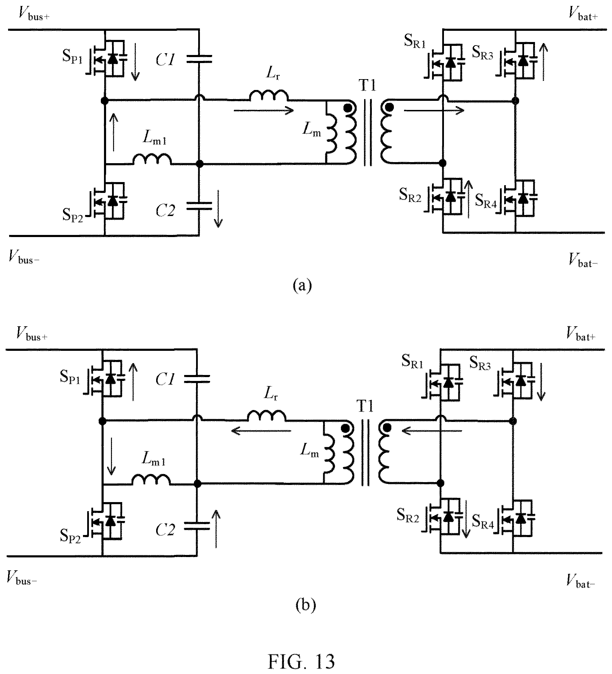

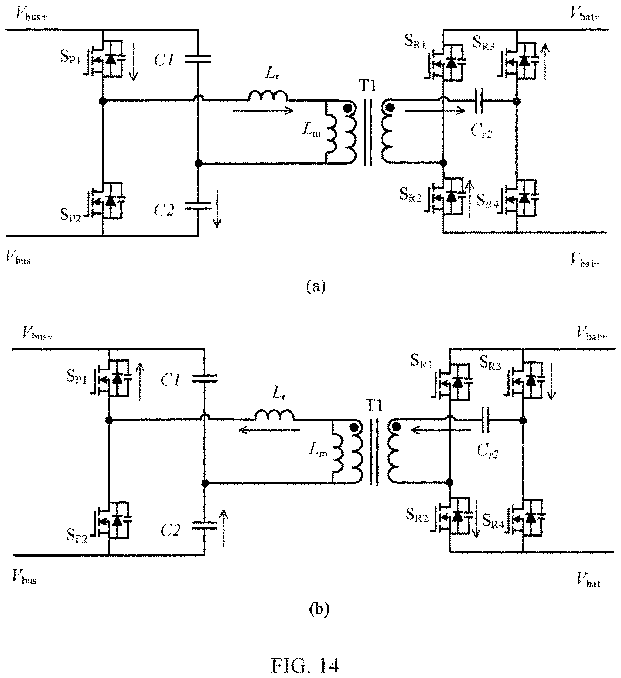

FIG. 13 and FIG. 14 respectively show an example of an energy flow process of the LLLC equalization circuit in a charging/discharging process and an energy flow process of the CLLC equalization circuit in a charging/discharging process according to embodiments of this application. A current conduction principle of the LLLC equalization circuit or the CLLC equalization circuit is similar to that of the LLC equalization circuit. Details are not described herein again.

Based on the equalization circuit provided in the foregoing embodiments, an embodiment of this application further provides a battery pack. In actual application, an equalization circuit may be configured in the battery pack, the equalization circuit includes the equalization circuit in embodiments of this application, a corresponding electronic component is configured in the equalization circuit, to implement an equalization function of the equalization circuit in embodiments of this application, and energy equalization between the battery pack and other battery packs in an energy storage system may be implemented by using the equalization circuit.

Based on the equalization circuit provided in the foregoing embodiments, an embodiment of this application further provides an energy storage system.

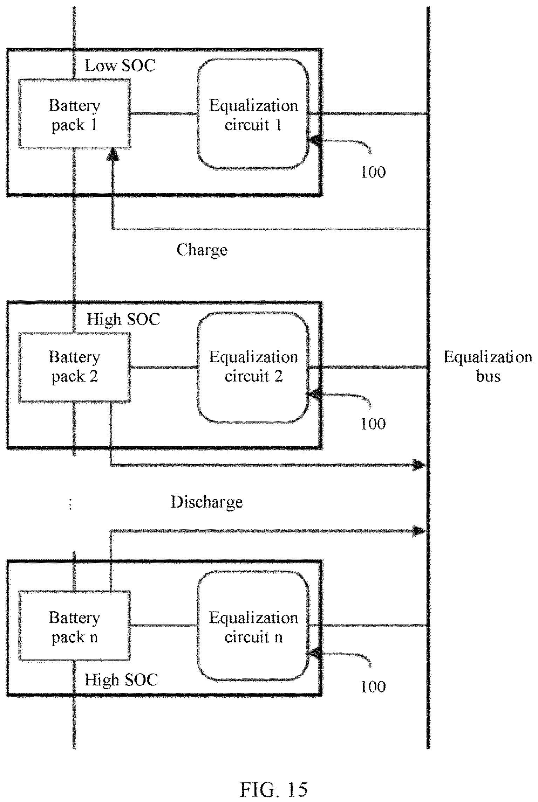

FIG. 15 shows an example of an energy storage system according to an embodiment of this application. An equalization circuit 100 in the energy storage system is any one of equalization circuits in the foregoing embodiments.

In a normal use process of the energy storage system, a battery pack is connected to at least one another battery pack in series, and the another battery pack is connected to another equalization circuit 100 corresponding to the another battery pack through an equalization bus. The equalization circuit 100 may output, to the equalization bus, discharge power output from the battery pack or input, to the battery pack, charge power output from the equalization bus. The equalization bus may receive discharge power of battery packs or may output charge power to the battery packs, charge power output by the equalization bus to some battery packs comes from discharge power output by other battery packs to the equalization bus, and charging and discharging processes are performed simultaneously.

In this embodiment provided in this application, the equalization bus is equivalent to serving as an energy "transfer station" in a charging/discharging process of the battery pack, and in a process of equalization between battery packs, energy can be equalized between the battery packs without energy interaction between the battery packs and the outside world.

The energy storage system implements bidirectional active energy equalization between the battery packs in the energy storage system through a design of a bidirectional equalization circuit and the equalization bus, and implements energy transfer between the battery packs in a low energy loss manner. Therefore, the battery packs can fully utilize energy, and the energy storage system can be charged and discharged to a greater extent and with higher efficiency. The energy storage system includes n battery packs, n equalization circuits 100 that one-to-one correspond to the n battery packs and that are any one of the foregoing equalization circuits, and an equalization bus, where n is a positive integer greater than or equal to 2. The n battery packs are connected in series. Each of the n equalization circuits is connected to each battery pack through one end of the equalization circuit, and the other end of the equalization circuit is connected to the equalization bus.

When a difference between an SOC or SOCs of one or more high-SOC battery packs in the n battery packs and an SOC or SOCs of one or more other low-SOC battery packs in the n battery packs exceeds an equalization threshold, a switch transistor in an equalization circuit corresponding to a high-SOC battery pack and a switch transistor in an equalization circuit corresponding to a low-SOC battery pack are turned on or off, so that the high-SOC battery pack outputs discharge power to the equalization bus through the equalization circuit corresponding to the high-SOC battery pack, and the equalization bus inputs charge power to the low-SOC battery pack through the equalization circuit corresponding to the low-SOC battery pack.

As described above, because the energy storage system has different optimal solutions for the equalization strategy in different working conditions, and efficiency of the equalization strategy is related to a gain of each equalization circuit, the gain of each equalization circuit is related to a relationship between a voltage of the equalization bus and a voltage of each battery pack. In this embodiment provided in this application, the voltage of the equalization bus may fluctuate with the voltage of the battery pack, to maintain a preset optimal equalization strategy. In the energy storage system, the voltage of the equalization bus may be adjusted by adjusting a switching frequency and a duty cycle of a switch transistor, so that a combination of a charging/discharging gain of each equalization circuit is optimal, and energy utilization of the energy storage system can be effectively improved.

In actual application, because voltages of battery packs in the energy storage system are different, a ratio of the voltage of the equalization bus to a voltage of each battery pack is also different, and each equalization circuit needs to operate under different working conditions to meet a requirement of performing equalization between battery packs in the voltage ratio relationship. Therefore, not all equalization circuits can be maintained in a working state with a target gain, equalization circuits corresponding to some battery packs need to be selected to operate in a working condition with the target gain, and target gains of other equalization circuits fluctuate up and down, to achieve highest efficiency. A standard for selecting the foregoing some battery packs may be using a highest voltage or a lowest voltage, or may be using an average value of voltages of battery packs or another standard. This is not limited in this embodiment of this application. When voltages of the some battery pack change, the voltage of the equalization bus also fluctuates, to maintain a preset optimal equalization strategy. For example, it is assumed that a ratio of a number of windings of primary-side windings of a transformer T1 to a number of windings of secondary-side winding of the transformer T1 is 2:1, and a rated standard voltage of battery packs is 200 V In an equalization process, voltages of battery packs that need to be discharged for equalization are respectively Vₒ₁, Vₒ₂, ..., and Vₒₙ, voltages of battery packs that need to be charged for equalization are respectively Vᵢ₁, Vᵢ₂, ..., and Vᵢₙ, and a voltage of the equalization bus is determined by using, as a reference, a battery pack whose voltage is the highest and that is of the battery packs that need to be discharged for equalization. If a target gain is 1, that is, an equalization circuit corresponding to the battery pack whose voltage is the highest and that needs to be discharged for equalization needs to operate in a working condition with a gain of 1, the voltage of the bus V_{bus}/(Vₒₘₐₓ×2)=1, and V_{bus}/Vₒₙ is greater than 1 except Vₒₘₐₓ. Because a voltage of a battery pack that needs to be charged for equalization is greater than a voltage of a battery pack that needs to be discharged for equalization, that is, Vₘ is less than Vₒₙ, V_{bus}/(Vᵢₙ×2) is greater than 1. In this case, a reciprocal of V_{bus}/(Vᵢₙ×2), that is, an operation gain of an equalization circuit corresponding to the battery pack that needs to be charged for equalization, is less than 1. In an equalization process, Vₒₘₐₓ fluctuates, the voltage of the equalization bus fluctuates with Vₒₘₐₓ according to a formula V_{bus}/(Vₒₘₐₓ×2)=1 by adjusting a switching frequency and a duty cycle of a switch transistor. In the foregoing equalization strategy, some equalization circuits operate in a working condition with a gain of 1, that is, operate in highest efficiency, and when other equalization circuits control the equalization bus to discharge to other battery packs or control the other battery packs to charge the equalization bus, a ratio of the voltage of the equalization bus to voltages of the battery packs is maintained at a target ratio (for example, 2:1), and equalization circuits are maintained operating within an upper or lower range of a gain of 1, so that the energy storage system has high overall equalization efficiency. The voltage of the equalization bus may also be set based on an average value of voltages of battery packs that need to be discharged for equalization, or may be set by using, as a reference, a maximum voltage or an average voltage value of battery packs that need to be charged for equalization. This is not specifically limited in this embodiment of this application, and a principle is the same as that of the foregoing equalization strategy. Details are not described again in this application. In addition, the target gain and the target ratio of the voltage ratio of the equalization bus to the battery pack may also be selected based on an actual situation. This is not specifically limited in this embodiment of this application. In a possible embodiment, when the target ratio of the voltage of the equalization bus to the voltage of the battery pack is 2:1, good equalization effect can be achieved.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An equalization circuit, comprising:
a transformer, a bridge resonant circuit, a bridge circuit, a first end, and a second end, wherein
the first end is connected to a primary-side winding of the transformer through the bridge resonant circuit;
the second end is connected to a secondary-side winding of the transformer through the bridge circuit;
one of the first end and the second end is configured to be connected to an equalization bus, and the other one is configured to be connected to a battery pack;
the bridge resonant circuit comprises a resonant inductor and at least one bridge arm, and the bridge arm of the bridge resonant circuit comprises at least two switch transistors;
the bridge circuit comprises at least one bridge arm, and the bridge arm of the bridge circuit comprises at least two switch transistors; and
the equalization circuit is configured to: when a state of charge (SOC, State of Charge) of the battery pack is less than an SOC or SOCs of any one or more other battery packs, and a difference between the SOCs of the other battery packs and the SOC of the battery pack exceeds an equalization threshold, receive discharge power of the one or more other battery packs through the equalization bus, and input charge power to the battery pack; or
when an SOC of the battery pack is greater than an SOC or SOCs of any one or more other battery packs, and a difference between the SOC of the battery pack and the SOCs of the other battery packs exceeds an equalization threshold, receive discharge power output by the battery pack, and output, to the equalization bus, charge power for inputting to the one or more other battery packs.

2. The equalization circuit according to claim 1, wherein
the bridge resonant circuit comprises a first bridge arm and a second bridge arm that are connected in parallel, and the resonant inductor is connected between a first end of the primary-side winding of the transformer and a midpoint of the first bridge arm or between a second end of the primary-side winding of the transformer and a midpoint of the second bridge arm; and
the bridge circuit comprises a third bridge arm and a fourth bridge arm that are connected in parallel, a midpoint of the third bridge arm is connected to a first end of the secondary-side winding of the transformer, and a midpoint of the fourth bridge arm is connected to a second end of the secondary-side winding of the transformer.

3. The equalization circuit according to claim 2, wherein
the first bridge arm comprises a first switch transistor and a second switch transistor that are connected in series; the midpoint of the first bridge arm is located between the first switch transistor and the second switch transistor; the second bridge arm comprises a first voltage divider capacitor and a second voltage divider capacitor that are connected in series; and the midpoint of the second bridge arm is located between the first voltage divider capacitor and the second voltage divider capacitor

4. The equalization circuit according to claim 2, wherein
the first bridge arm comprises a first switch transistor and a second switch transistor that are connected in series, and the midpoint of the first bridge arm is located between the first switch transistor and the second switch transistor;
the second bridge arm comprises a third switch transistor and a fourth switch transistor that are connected in series, and the midpoint of the second bridge arm is located between the third switch transistor and the fourth switch transistor; and
the bridge resonant circuit further comprises a resonant capacitor; and the resonant capacitor, the resonant inductor, and the primary-side winding of the transformer are connected in series between the first end of the primary-side winding of the transformer and the midpoint of the first bridge arm or between the second end of the primary-side winding of the transformer and the midpoint of the second bridge arm.

5. The equalization circuit according to any one of claims 2 to 4, wherein
the third bridge arm comprises a fifth switch transistor and a sixth switch transistor that are connected in series, and the midpoint of the third bridge arm is located between the fifth switch transistor and the sixth switch transistor; and
the fourth bridge arm comprises a third voltage divider capacitor and a fourth voltage divider capacitor that are connected in series, and the midpoint of the fourth bridge arm is located between the third voltage divider capacitor and the fourth voltage divider capacitor

6. The equalization circuit according to any one of claims 2 to 4, wherein
the third bridge arm comprises a fifth switch transistor and a sixth switch transistor that are connected in series, and the midpoint of the third bridge arm is located between the fifth switch transistor and the sixth switch transistor; and
the fourth bridge arm comprises a seventh switch transistor and an eighth switch transistor, and the midpoint of the fourth bridge arm is located between the seventh switch transistor and the eighth switch transistor.

7. The equalization circuit according to claim 6, wherein
the equalization circuit further comprises an additional resonant capacitor; and
the additional resonant capacitor is connected to the first end of the secondary-side winding of the transformer and the midpoint of the third bridge arm, or is connected to the second end of the secondary-side winding of the transformer and the midpoint of the fourth bridge arm.

8. The equalization circuit according to claims 2 to 6, wherein
the equalization circuit further comprises an additional inductor; and
the additional inductor is connected to the midpoint of the first bridge arm and the midpoint of the second bridge arm.

9. The equalization circuit according to any one of claims 1 to 8, wherein
the equalization circuit is configured to adjust a switching frequency and a duty cycle of a switch transistor of the bridge resonant circuit or the bridge circuit, so that a gain of the equalization circuit is a target gain.

10. The equalization circuit according to any one of claims 1 to 9, wherein
the equalization circuit is configured to adjust the switching frequency and the duty cycle of the switch transistor of the bridge resonant circuit or the bridge circuit, so that a ratio of a voltage of the equalization bus to a voltage of the battery pack is a target ratio.

11. The equalization circuit according to claim 10, wherein
the target ratio is 2:1.

12. A battery pack, comprising the equalization circuit according to any one of claims 1 to 11.

13. An energy storage system, comprising:
n battery packs, n equalization circuits according to any one of claims 1 to 11, and an equalization bus, wherein n is a positive integer greater than or equal to 2, and the battery packs one-to-one correspond to the equalization circuits;
the n battery packs are connected in series; and
a first end of each equalization circuit is connected to a corresponding battery pack, and a second end of each equalization circuit is connected to the equalization bus.
